# EUROPEAN PATENT APPLICATION

(11) **EP 1 990 718 A1**
(43) Date of publication of application: **12.11.2008**
(21) Application number: 08251560.2
(22) Date of filing: 29.04.2008
(51) Int. Cl.: G06F 9/46, G06F 9/445, G06F 15/80

(54) **Method and apparatus for loading data and instructions into a computer**

(30) Priority: 07.05.2007 US 800714
(71) Applicant: VNS Portfolio LLC, Cupertino, CA 95014 (US)
(72) Inventor: Moore Charles H, Sierra City CA 96125 (US); Montvelishsky Michael B, Burlingame CA 94010 (US); FOX Jeffrey Arthur, Berkeley CA 94710 (US)
(74) Representative: Beresford, Keith Denis Lewis

(57) **Abstract**

A computer array (10) has a plurality of computers (12). The computers (12) communicate with each other asynchronously, and the computers (12) themselves operate in a generally asynchronous manner internally. When one computer (12) attempts to communicate with another it goes to sleep until the other computer (12) is ready to complete the transaction, thereby saving power and reducing heat production. The sleeping computer (12) can be awaiting data or instructions (12). In the case of instructions, the sleeping computer (12) can be waiting to store the instructions or to immediately execute the instructions. In the later case, the instructions are placed in an instruction register (30a) when they are received and executed therefrom, without first placing the instructions first into memory. The instructions can include a crawler (201) which is capable of traversing multiple processors along a predefined path (202) and performing a series of operations in preselected computers. In one application, the crawler (201) performs a stress test into a selected computer (12d).

## Description

### BACKGROUND OF THE INVENTION

### Field of the Invention

The present invention relates to the field of computers and computer processors.

### Description of the Background Art

In the art of computing, processing speed is a much desired quality, and the quest to create faster computers and processors is ongoing. However, it is generally acknowledged in the industry that the limits for increasing the speed in microprocessors are rapidly being approached, at least using presently known technology. Therefore, there is an increasing interest in the use of multiple processors to increase overall computer speed by sharing computer tasks among the processors.

The use of multiple processors tends to create a need for communication between the processors. Indeed, there may well be a great deal of communication between the processors, such that a significant portion of time is spent in transferring instructions and data there between. Where the amount of such communication is significant, each additional instruction that must be executed in order to accomplish it places an incremental delay in the process which, cumulatively, can be very significant. The conventional method for communicating instructions or data from one computer to another involves first storing the data or instruction in the receiving computer and then, subsequently, calling it for execution (in the case of an instruction) or for operation thereon (in the case of data).

It would be useful to reduce the number of steps required to transmit, receive, and then use information, in the form of data or instructions, between computers. However, to the inventor's knowledge no prior art system has streamlined the above described process in a significant manner.

Also, in the prior art it is known that it is necessary to "get the attention" of a computer from time to time. That is, sometimes even though a computer may be busy with one task, another time sensitive task requirement can occur that may necessitate temporarily diverting the computer away from the first task. Examples include, but are not limited to, instances where a user input device is used to provide input to the computer. In such cases, the computer might need to temporarily acknowledge the input and/or react in accordance with the input. Then, the computer will either continue what it was doing before the input or else change what it was doing based upon the input. Although an external input is used as an example here, the same situation occurs when there is a potential conflict for the attention of the ALU between internal aspects of the computer, as well.

When receiving data and change in status from I/O ports, there have been two methods available in the prior art. One has been to "poll" the port, which involves reading the status of the port at fixed intervals to determine whether any data has been received or a change of status has occurred. However, polling the port consumes considerable time and resources which could usually be better used doing other things. A better alternative has often been the use of "interrupts". When using interrupts, a processor can go about performing its assigned task and then, when a I/O Port/Device needs attention as indicated by the fact that a byte has been received or status has changed, it sends an Interrupt Request (IRQ) to the processor. Once the processor receives an Interrupt Request, it finishes its current instruction, places a few things on the stack, and executes the appropriate Interrupt Service Routine (ISR) which can remove the byte from the port and place it in a buffer. Once the ISR has finished, the processor returns to where it left off. Using this method, the processor doesn't have to waste time, looking to see if the I/O Device is in need of attention, but rather the device will only service the interrupt when it needs attention. However, the use of interrupts, itself, is far less than desirable in many cases, since there can be a great deal of overhead associated with the use of interrupts. For example, each time an interrupt occurs, a computer may have to temporarily store certain data relating to the task it was previously trying to accomplish, then load data pertaining to the interrupt, and then reload the data necessary for the prior task once the interrupt is handled. Interrupts disturb time-sensitive processing. Essentially they make timing unpredictable. Obviously, it would be desirable to reduce or eliminate all of this time and resource consuming overhead. However, no prior art method has been developed which has alleviated the need for interrupts.

Conventional parallel computing usually ties a number of computers to a com data path or bus. In such an arrangement individual computers are each assigned an address. In a beowolf cluster for example individual PC's are connected to an Ethernet by TCP/IP protocol and given an address or URL. When data or instructions are conveyed to an individual computer they are placed in a packet addressed to that computer.

A related problem is how to efficiently transfer data and instructions to individual computers in such a computer. This problem is more difficult due to the architecture of this type of computer not including separately addressable computers.

### SUMMARY

One aspect of the invention provides an array of computers each linked to adjacent neighbors by data buses linking ports of the computers, the array having means for providing information to a destination which is any desired one of the computers in the array. The information may be data and/or instructions, e.g. a program to be implemented by the desired one of the computers. In an embodiment the means for providing the information to any desired one of the computers is a program, referred to hereinafter as a crawler, which carries the information and also predefines a route through the array from a starting point (i.e. a predetermined computer which may be on the edge of the array) to a destination which is the desired one of the computers, and copies itself from computer to computer along the predefined route. At the desired destination computer, the information is provided to that computer. If the information is instructions, the instructions are carried out at that computer.

The crawler may also define a route from the destination computer to another computer, which for example is the original starting point or could be a different computer. In one embodiment, the crawler carries the result of the instructions to the another computer.

In one embodiment, the crawler simply delivers a program and/or data to a computer and then ceases.

In an embodiment, route is statically defined in the payload of the crawler program: in other words the payload predetermines the route (unlike TCP/IP where the route is dynamically defined).

In an embodiment, the route information is copied from memory to memory of the computers during the crawl along the route. If the data/instruction payload in the crawler contains information about its route and this payload is not consumed by computers along the route, then a destination computer could receive the information about the route taken and its origin.

One embodiment of the present invention comprises a computer having its own memory such that it is capable of independent computational functions. In one embodiment of the invention a plurality of the computers are arranged in an array. In order to accomplish tasks cooperatively, the computers must pass data and/or instructions from one to another. Since all of the computers working simultaneously will typically provide much more computational power than is required by most tasks, and since whatever algorithm or method that is used to distribute the task among the several computers will almost certainly result in an uneven distribution of assignments, it is anticipated that at least some, and perhaps most, of the computers may not be actively participating in the accomplishment of the task at any given time. Therefore, it would be desirable to find a way for under-used computers to be available to assist their busier neighbors by "lending" either computational resources, memory, or both. In order that such a relationship be efficient and useful it would further be desirable that communications and interaction between neighboring computers be as quick and efficient as possible. Therefore, an embodiment of the present invention provides a means and method for a computer to execute instructions and/or act on data provided directly from another computer, rather than having to receive and then store the data and/or instructions prior to such action. It will be noted that this embodiment of the invention will also be useful for instructions that will act as an intermediary to cause a computer to "pass on" instructions or data from one other computer to yet another computer.

In an embodiment, in order to prevent unnecessary consumption of power and unnecessary production of heat, when a computer attempts to communicate with one or more of its neighbors it will be in a dormant mode consuming essentially no power until the neighbor or one of the neighbors acts to complete the communication. However, this is not a necessary aspect of the present invention. Furthermore, in order to accomplish the desired savings of power and reduced heat production it is desirable that the initiating computer cease, or at least significantly reduce, its power consumption while it is awaiting completion of the communication. It is conceivable that this could be accomplished by any of a number of means. For example, if the computer were timed by either an internal or an external clock, then that clock could be slowed or stopped during that period of time.

In one embodiment of the invention described herein instructions and data are treated essentially identically whether their source is the internal memory of the computer or else whether such instructions and data are being received from another source, such as another computer, an external communications port, or the like. This is significant because "additional" operations, such as storing the data or instructions and thereafter recalling them from internal memory, become unnecessary, thereby reducing the number of instructions required and increasing the speed of operation of the computers involved.

In an embodiment, very small groups of instructions can be communicated to another computer, generally simultaneously, such that relatively simple operations that require repetitive iterations can be quickly and easily accomplished. This will greatly expedite the process of communication between the computers.

In an embodiment since there are a plurality of computers available to perform various tasks, and since one or more computers can be placed in a dormant state wherein they use essentially no power while awaiting an input, such computers can be assigned the task of awaiting inputs, thereby reducing or eliminating the need to "interrupt" other computers that may be accomplishing other tasks.

In an embodiment data and instructions can be efficiently loaded and executed into individual computers and/or transferred between such computers. This can be accomplished without recourse to a common bus even when each computer is only directly connected to a limited number of neighbors.

An embodiment of the invention provides a method and means for allowing a computer to execute instructions as they are received from an external source without first storing said instruction, and an associated method for using that method and means to facilitate communications between computers and the ability of a computer to use the available resources of another computer. The embodiment provides a direct execution method and apparatus in a combination of multiple computers on a single microchip, wherein operating efficiency is important not only because of the desire for increased operating speed but also because of the power savings and heat reduction that are a consequence of the greater efficiency.

These and other objects and advantages of embodiments of the present invention will become clear to those skilled in the art in view of the description of modes of carrying out the invention, and the industrial applicability thereof, as described herein and as illustrated in the several figures of the drawing. The objects and advantages listed are not an exhaustive list of all possible advantages of embodiments of the invention. Moreover, it will be possible to practice the invention even where one or more of the intended objects and/or advantages might be absent or not required in the application.

Further, those skilled in the art will recognize that various embodiments of the present invention may achieve one or more, but not necessarily all, of the described objects and/or advantages. Accordingly, the objects and/or advantages described herein are not essential elements of the present invention, and should not be construed as limitations.

### BRIEF DESCRIPTION OF THE DRAWINGS

Fig. 1 is a diagrammatic view of a computer array, according to the present invention;
Fig. 2 is a detailed diagram showing a subset of the computers of Fig. 1 and a more detailed view of the interconnecting data buses of Fig. 1;
Fig. 3 is a block diagram depicting a general layout of one of the computers of Figs. 1 and 2;
Fig. 4 is a diagrammatic representation of an instruction word according to the present inventive application;
Fig. 5 is a schematic representation of the slot sequencer 42 of Fig. 3;
Fig. 6 is a flow diagram depicting an example of a micro-loop according to the present invention;
Fig. 7 is a is a diagrammatic representation of a crawler instruction according to the present inventive application;
Fig. 8 is a flow diagram depicting an example of the figure 7 inventive method.

### DETAILED DESCRIPTION OF THE INVENTION

An embodiment of this invention is described in the following description with reference to the Figures, in which like numbers represent the same or similar elements. While this embodiment is described in terms of modes for achieving objectives, it will be appreciated by those skilled in the art that variations may be accomplished in view of these teachings without deviating from the spirit or scope of the present invention.

The embodiments and variations of the invention described herein, and/or shown in the drawings, are presented by way of example only and are not limiting as to the scope of the invention. Unless otherwise specifically stated, individual aspects and components of the invention may be omitted or modified, or may have substituted therefore known equivalents, or as yet unknown substitutes such as may be developed in the future or such as may be found to be acceptable substitutes in the future. The invention may also be modified for a variety of applications while remaining within the spirit and scope of the claimed invention, since the range of potential applications is great, and since it is intended that the present invention be adaptable to many such variations.

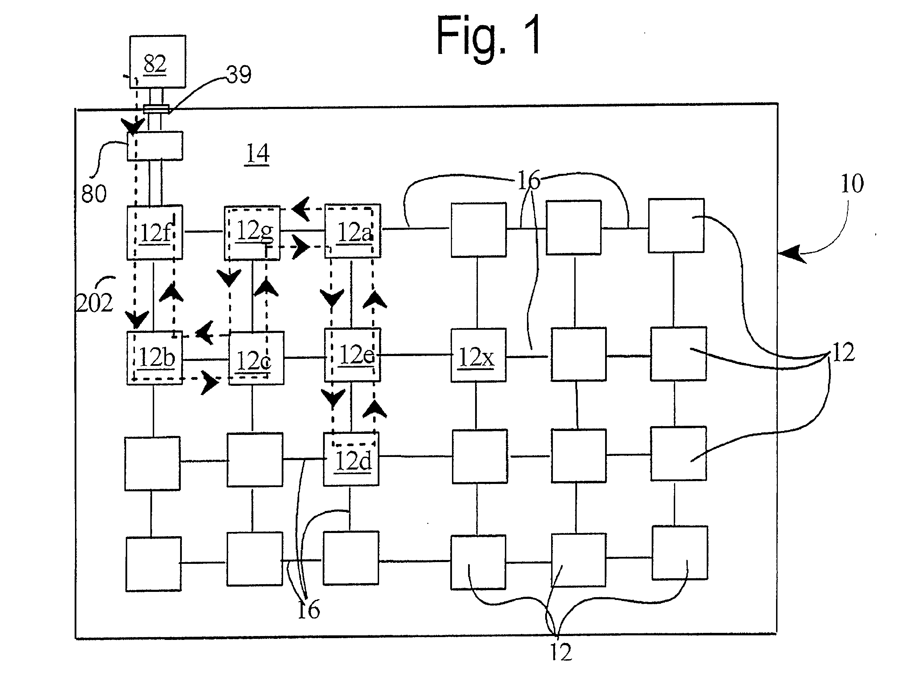

An array of individual computers is depicted in a diagrammatic view in Fig. 1 and is designated therein by the general reference character 10. The computer array 10 has a plurality (twenty four in the example shown) of computers 12 (sometimes also referred to as "cores" or "nodes" in the example of an array). In the example shown, all of the computers 12 are located on a single die 14. According to the present embodiment, each of the computers 12 is a generally independently functioning computer, as will be discussed in more detail hereinafter. The computers 12 are interconnected by a plurality (the quantities of which will be discussed in more detail hereinafter) of interconnecting data buses 16. In this example, the data buses 16 are bidirectional, asynchronous, high-speed, parallel data buses, although it is within the scope of the invention that other interconnecting means might be employed for the purpose. In the present embodiment of the array 10, not only is data communication between the computers 12 asynchronous, the individual computers 12 also operate in an internally asynchronous mode. This has been found by the inventor to provide important advantages. For example, since a clock signal does not have to be distributed throughout the computer array 10, a great deal of power is saved. Furthermore, not having to distribute a clock signal eliminates many timing problems that could limit the size of the array 10 or cause other known difficulties. Also, the fact that the individual computers operate asynchronously saves a great deal of power, since each computer will use essentially no power when it is not executing instructions, since there is no clock running therein.

One skilled in the art will recognize that there will be additional components on the die 14 that are omitted from the view of Fig. 1 for the sake of clarity. Such additional components include power buses, external connection pads, and other such common aspects of a microprocessor chip.

Computer 12e is an example of one of the computers 12 that is not on the periphery of the array 10. That is, computer 12e has four orthogonally adjacent computers 12a, 12x, 12c and 12d. This grouping of computers 12a through 12e will be used, by way of example, hereinafter in relation to a more detailed discussion of the communications between the computers 12 of the array 10. As can be seen in the view of Fig. 1, interior computers such as computer 12e will have four other computers 12 with which they can directly communicate via the buses 16. In the following discussion, the principles discussed will apply to all of the computers 12 except that the computers 12 on the periphery of the array 10 will be in direct communication with only three or, in the case of the corner computers 12, only two other of the computers 12.

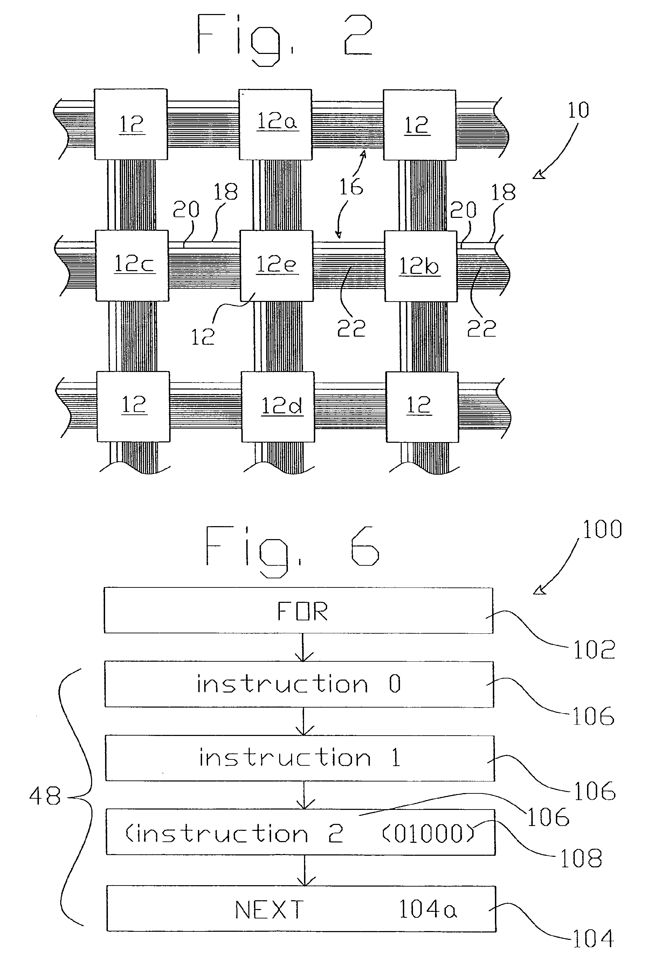

Fig. 2 is a more detailed view of a portion of Fig. 1 showing only some of the computers 12 and, in particular, computers 12a through 12e, inclusive. The view of Fig. 2 also reveals that the data buses 16 each have a read line 18, a write line 20 and a plurality (eighteen , in this example) of data lines 22. The data lines 22 are capable of transferring all the bits of one eighteen-bit instruction word generally simultaneously in parallel. It should be noted that, in one embodiment of the invention, some of the computers 12 are mirror images of adjacent computers. However, whether the computers 12 are all oriented identically or as mirror images of adjacent computers is not an aspect of this presently described embodiment. Therefore, in order to better describe this embodiment, this potential complication will not be discussed further herein.

According to the present embodiment, a computer 12, such as the computer 12e can set high one, two, three or all four of its read lines 18 such that it is prepared to receive data from the respective one, two, three or all four adjacent computers 12. Similarly, it is also possible for a computer 12 to set one, two, three or all four of its write lines 20 high.

When one of the adjacent computers 12a, 12x, 12c or 12d sets a write line 20 between itself and the computer 12e high, if the computer 12e has already set the corresponding read line 18 high, then a word is transferred from that computer 12a, 12x, 12c or 12d to the computer 12e on the associated data lines 22. Then, the sending computer 12 will release the write line 20 and the receiving computer (12e in this example) pulls both the write line 20 and the read line 18 low. The latter action will acknowledge to the sending computer 12 that the data has been received. Note that the above description is not intended necessarily to denote the sequence of events in order. In actual practice, the receiving computer may try to set the write line 20 low slightly before the sending computer 12 releases (stops pulling high) its write line 20. In such an instance, as soon as the sending computer 12 releases its write line 20 the write line 20 will be pulled low by the receiving computer 12e.

In the present example, only a programming error would cause both computers 12 on the opposite ends of one of the buses 16 to try to set high the read line 18 there-between. It is not an error for both computers to read. Indeed this is the default condition. Eventually one will quit reading and write. Similarly, as discussed above, it is not currently anticipated that it would be desirable to have a single computer 12 set more than one of its four write lines 20 high. However, it is presently anticipated that there will be occasions wherein it is desirable to set different combinations of the read lines 18 high such that one of the computers 12 can be in a wait state awaiting data from the first one of the chosen computers 12 to set its corresponding write line 20 high.

In the example discussed above, computer 12e was described as setting one or more of its read lines 18 high before an adjacent computer (selected from one or more of the computers 12a, 12x, 12c or 12d) has set its write line 20 high. However, this process can certainly occur in the opposite order. For example, if the computer 12e were attempting to write to the computer 12a, then computer 12e would set the write line 20 between computer 12e and computer 12a to high. If the read line 18 between computer 12e and computer 12a has then not already been set to high by computer 12a, then computer 12e will simply wait until computer 12a does set that read line 20 high. Then, as discussed above, when both of a corresponding pair of write line 18 and read line 20 are high the data awaiting to be transferred on the data lines 22 is transferred. Thereafter, the receiving computer 12 (computer 12a, in this example) sets both the read line 18 and the write line 20 between the two computers (12e and 12a in this example) to low as soon as the sending computer 12e releases the write line 18.

Whenever a computer 12 such as the computer 12e has set one of its write lines 20 high in anticipation of writing it will simply wait, using essentially no power, until the data is "requested", as described above, from the appropriate adjacent computer 12, unless the computer 12 to which the data is to be sent has already set its read line 18 high, in which case the data is transmitted immediately. Similarly, whenever a computer 12 has set one or more of its read lines 18 to high in anticipation of reading it will simply wait, using essentially no power, until the write line 20 connected to a selected computer 12 goes high to transfer an instruction word between the two computers 12.

As discussed above, there may be several potential means and/or methods to cause the computers 12 to function as described. However, in this present example, the computers 12 so behave simply because they are operating generally asynchronously internally (in addition to transferring data there-between in the asynchronous manner described). That is, instructions are generally completed sequentially. When either a write or read instruction occurs, there can be no further action until that instruction is completed (or, perhaps alternatively, until it is aborted, as by a "reset" or the like). There is no regular clock pulse, in the prior art sense. Rather, a pulse is generated to accomplish a next instruction only when the instruction being executed either is not a read or write type instruction (given that a read or write type instruction would require completion, often by another entity) or else when the read or write type operation is, in fact, completed.

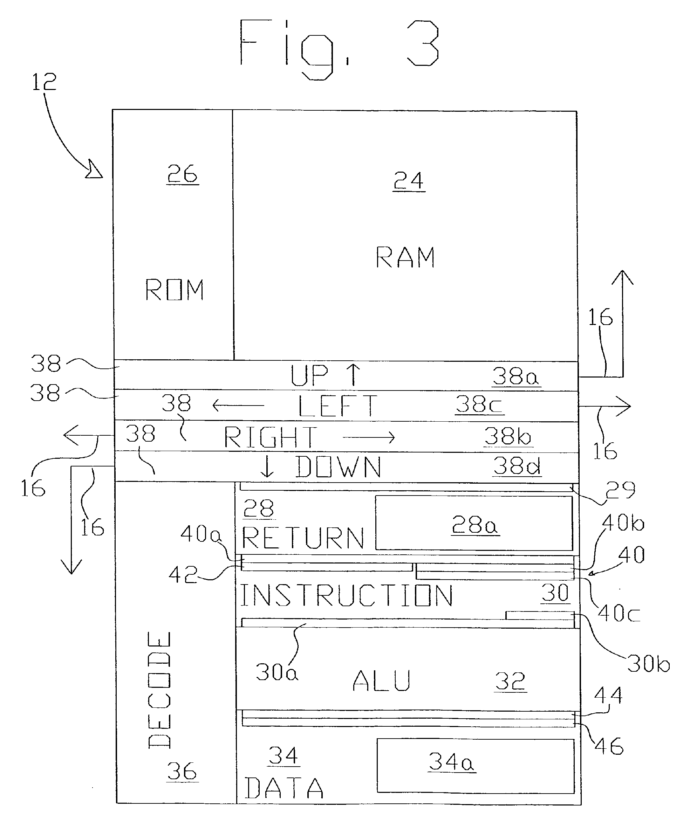

Fig. 3 is a block diagram depicting the general layout of an example of one of the computers 12 of Figs. 1 and 2. As can be seen in the view of Fig. 3, each of the computers 12 is a generally self contained computer having its own RAM 24 and ROM 26. As mentioned previously, the computers 12 are also sometimes referred to as individual "nodes", given that they are, in the present example, combined on a single chip.

Other basic components of the computer 12 are a return stack 28 (including an R register 29, discussed hereinafter), an instruction area 30, an arithmetic logic unit ("ALU" or "processor") 32, a data stack 34 and a decode logic section 36 for decoding instructions. One skilled in the art will be generally familiar with the operation of stack based computers such as the computers 12 of this present example. The computers 12 are dual stack computers having the data stack 34 and the separate return stack 28.

In this embodiment of the invention, the computer 12 has four communication ports 38 for communicating with adjacent computers 12. The communication ports 38 are tri-state drivers, having an off status, a receive status (for driving signals into the computer 12) and a send status (for driving signals out of the computer 12) Of course, if the particular computer 12 is not on the interior of the array (Fig. 1) such as the example of computer 12e, then one or more of the communication ports 38 will not be used in that particular computer, at least for the purposes described above. However, those communication ports 38 that do abut the edge of the die 14 can have additional circuitry, either designed into such computer 12 or else external to the computer 12 but associated therewith, to cause such communication port 38 to act as an external I/O port 39 (Fig. 1). Examples of such external I/O ports 39 include, but are not limited to, USB (universal serial bus) ports, RS232 serial bus ports, parallel communications ports, analog to digital and/or digital to analog conversion ports, and many other possible variations. No matter what type of additional or modified circuitry is employed for this purpose, according to the presently described embodiment of the invention the method of operation of the "external" I/O ports 39 regarding the handling of instructions and/or data received there from will be alike to that described, herein, in relation to the "internal" communication ports 38. In Fig. 1 an "edge" computer 12f is depicted with associated interface circuitry 80 (shown in block diagrammatic form) for communicating through an external I/O port 39 with an external device 82.

In the presently described embodiment, the instruction area 30 includes a number of registers 40 including, in this example, an A register 40a, a B register 40b and a P register 40c. In this example, the A register 40a is a full eighteen-bit register, while the B register 40b and the P register 40c are nine-bit registers.

Although the invention is not limited by this example, the present computer 12 is implemented to execute native Forth language instructions. As one familiar with the Forth computer language will appreciate, complicated Forth instructions, known as Forth "words" are constructed from the native processor instructions designed into the computer. The collection of Forth words is known as a "dictionary". In other languages, this might be known as a "library". As will be described in greater detail hereinafter, the computer 12 reads eighteen bits at a time from RAM 24, ROM 26 or directly from one of the data buses 16 (Fig. 2). However, since in Forth most instructions (known as operand-less instructions) obtain their operands directly from the stacks 28 and 34, they are generally only 5 bits in length, such that up to four instructions can be included in a single eighteen-bit instruction word, with the condition that the last instruction in the group is selected from a limited set of instructions that require only three bits. (In the described embodiment, the two least significant bits of an instruction in the last position are assumed to be "00".) Also depicted in block diagrammatic form in the view of Fig. 3 is a slot sequencer 42.

In this embodiment of the invention, data stack 34 is a last-in-first-out stack for parameters to be manipulated by the ALU 32, and the return stack 28 is a last-in first-out stack for nested return addresses used by CALL and RETURN instructions. The return stack 28 is also used by PUSH, POP and NEXT instructions, as will be discussed in some greater detail, hereinafter. The data stack 34 and the return stack 28 are not arrays in memory accessed by a stack pointer, as in many prior art computers. Rather, the stacks 34 and 28 are an array of registers. The top two registers in the data stack 34 are a T register 44 and an S register 46. The remainder of the data stack 34 has a circular register array 34a having eight additional hardware registers therein numbered, in this example S₂ through S₉. One of the eight registers in the circular register array 34a will be selected as the register below the S register 46 at any time. The value in the shift register that selects the stack register to be below S cannot be read or written by software. Similarly, the top position in the return stack 28 is the dedicated R register 29, while the remainder of the return stack 28 has a circular register array 28a having eight additional hardware registers therein (not specifically shown in the drawing) that are numbered, in this example R₁ through R₁₁.

In this embodiment of the invention, there is no hardware detection of stack overflow or underflow conditions. Generally, prior art processors use stack pointers and memory management, or the like, such that an error condition is flagged when a stack pointer goes out of the range of memory allocated for the stack. That is because, were the stacks located in memory, an overflow or underflow would overwrite or use as a stack item something that is not intended to be part of the stack. However, because the present embodiment has the circular arrays 28a and 34a at the bottom on the stacks 28 and 34 the stacks 28 and 34 cannot overflow or underflow out of the stack area. Instead, the circular arrays 28a and 34a will merely wrap around the circular array of registers. Because the stacks 28 and 34 have finite depth, pushing anything to the top of a stack 28 or 34 means something on the bottom is being overwritten. Pushing more than ten items to the data stack 34, or more than thirteen items to the return stack 28 must be done with the knowledge that doing so will result in the item at the bottom of the stack 28 or 34 being overwritten. It is the responsibility of software to keep track of the number of items on the stacks 28 and 34 and not try to put more items there than the respective stacks 28 and 34 can hold. The hardware will not detect an overwriting of items at the bottom of the stack or flag it as an error. However, it should be noted that the software can take advantage of the circular arrays 28a and 34a at the bottom of the stacks 28 and 34 in several ways. As just one example, the software can simply assume that a stack 28 or 34 is 'empty' at any time. There is no need to clear old items from the stack as they will be pushed down towards the bottom where they will be lost as the stack fills. So there is nothing to initialize for a program to assume that the stack is empty.

In addition to the registers previously discussed herein, the instruction area 30 also has an 18 bit instruction register 30a for storing the instruction word 48 that is presently being used, and an additional 5 bit opcode bus 30b for the instruction in the particular instruction presently being executed.

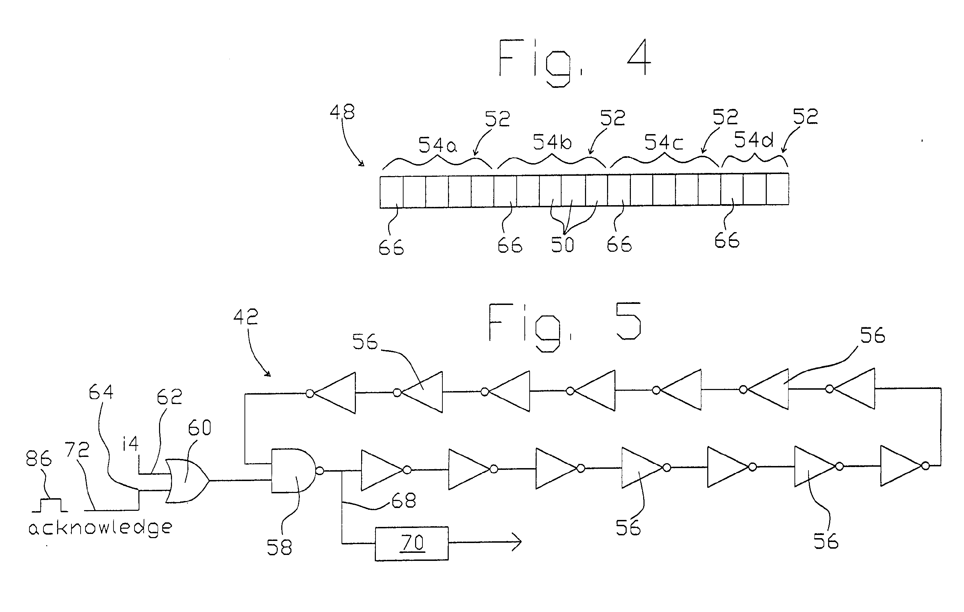

Fig. 4 is a diagrammatic representation of an instruction word 48. (It should be noted that the instruction word 48 can actually contain instructions, data, or some combination thereof.) The instruction word 48 consists of eighteen bits 50. This being a binary computer, each of the bits 50 will be a '1' or a '0'. As previously discussed herein, the eighteen-bit wide instruction word 48 can contain up to four instructions 52 in four slots 54 called slot zero 54a, slot one 54b, slot two 54c and slot three 54d. In the present embodiment of the invention, the eighteen-bit instruction words 48 are always read as a whole. Therefore, since there is always a potential of having up to four instructions in the instruction word 48, a no-op (no operation) instruction is included in the instruction set of the computer 12 to provide for instances when using all of the available slots 54 might be unnecessary or even undesirable. It should be noted that, according to one particular embodiment of the invention, the polarity (active high as compared to active low) of bits 50 in alternate slots (specifically, slots one 54b and three 54c) is reversed. However, this is not a necessary aspect of the presently described embodiment and, therefore, in order to better explain this embodiment this potential complication is avoided in the following discussion.

Fig. 5 is a schematic representation of the slot sequencer 42 of Fig. 3. As can be seen in the view of Fig. 5, the slot sequencer 42 has a plurality (fourteen in this example) of inverters 56 and one NAND gate 58 arranged in a ring, such that a signal is inverted an odd number of times as it travels through the fourteen inverters 56 and the NAND gate 58. A signal is initiated in the slot sequencer 42 when either of the two inputs to an OR gate 60 goes high. A first OR gate input 62 is derived from a bit i4 66 (Fig. 4) of the instruction 52 being executed. If bit i4 is high then that particular instruction 52 is an ALU instruction, and the i4 bit 66 is '1'. When the i4 bit is '1', then the first OR gate input 62 is high, and the slot sequencer 42 is triggered to initiate a pulse that will cause the execution of the next instruction 52.

When the slot sequencer 42 is triggered, either by the first OR gate input 62 going high or by the second OR gate input 64 going high (as will be discussed hereinafter), then a signal will travel around the slot sequencer 42 twice, producing an output at a slot sequencer output 68 each time. The first time the signal passes the slot sequencer output 68 it will be low, and the second time the output at the slot sequencer output 68 will be high. The relatively wide output from the slot sequencer output 68 is provided to a pulse generator 70 (shown in block diagrammatic form) that produces a narrow timing pulse as an output. One skilled in the art will recognize that the narrow timing pulse is desirable to accurately initiate the operations of the computer 12.

When the particular instruction 52 being executed is a read or a write instruction, or any other instruction wherein it is not desired that the instruction 52 being executed triggers immediate execution of the next instruction 52 in sequence, then the i4 bit 66 is '0' (low) and the first OR gate input 62 is, therefore, also low. One skilled in the art will recognize that the timing of events in a device such as the computers 12 is generally quite critical, and this is no exception. Upon examination of the slot sequencer 42 one skilled in the art will recognize that the output from the OR gate 60 must remain high until after the signal has circulated past the NAND gate 58 in order to initiate the second "lap" of the ring. Thereafter, the output from the OR gate 60 will go low during that second "lap" in order to prevent unwanted continued oscillation of the circuit.

As can be appreciated in light of the above discussion, when the i4 bit 66 is '0', then the slot sequencer 42 will not be triggered - assuming that the second OR gate input 66, which will be discussed hereinafter, is not high.

As discussed, above, the i4 bit 66 of each instruction 52 is set according to whether or not that instruction is a read or write type of instruction, as opposed to that instruction being one that requires no input or output. The remaining bits 50 in the instruction 52 provide the remainder of the particular opcode for that instruction. In the case of a read or write type instruction, one or more of the bits may be used to indicate where data is to be read from, or written to, in that particular computer 12. In the present example of the invention, data to be written always comes from the T register 44 (the top of the data stack 34), however data can be selectively read into either the T register 44 or else the instruction area 30 from where it can be executed. That is because, in this particular embodiment of the invention, either data or instructions can be communicated in the manner described herein and instructions can, therefore, be executed directly from the data bus 16.

One or more of the bits 50 will be used to indicate which of the ports 38, if any, is to be set to read or write. This later operation is optionally accomplished by using one or more bits to designate a register 40, such as the A register 40a, the B register 40b, or the like. In such an example, the designated register 40 will be preloaded with data having a bit corresponding to each of the ports 38 (and, also, any other potential entity with which the computer 12 may be attempting to communicate, such as memory (RAM 24 or ROM 26), an external communications port 39, or the like.) For example, each of four bits in the particular register 40 can correspond to each of the up port 38a, the right port 38b, the left port 38c or the down port 38d. In such case, where there is a '1' at any of those bit locations, communication will be set to proceed through the corresponding port 38. As previously discussed herein, in the present embodiment of the invention it is anticipated that a read opcode might set more than one port 38 for communication in a single instruction while, although it is possible, it is not anticipated that a write opcode will set more than one port 38 for communication in a single instruction.

The immediately following example will assume a communication wherein computer 12e is attempting to write to computer 12c, although the example is applicable to communication between any adjacent computers 12. When a write instruction is executed in a writing computer 12e, the selected write line 20 (in this example, the write line 20 between computers 12e and 12c) is set high, if the corresponding read line 18 is already high then data is immediately sent from the selected location through the selected communications ports 38. Alternatively, if the corresponding read line 18 is not already high, then computer 12e will simply stop operation until the corresponding read line 18 does go high. The mechanism for stopping (or, more accurately, not enabling further operations of) the computer 12a when there is a read or write type instruction has been discussed previously herein. In short, the opcode of the instruction 52 will have a '0' at bit position i4 66, and so the first OR gate input 62 of the OR gate 60 is low, and so the slot sequencer 42 is not triggered to generate an enabling pulse.

As for how the operation of the computer 12e is resumed when a read or write type instruction is completed, the mechanism for that is as follows: When both the read line 18 and the corresponding write line 20 between computers 12e and 12c are high, then both lines 18 and 20 will released by each of the respective computers 12 that is holding it high. (In this example, the sending computer 12e will be holding the write line 18 high while the receiving computer 12c will be holding the read line 20 high). Then the receiving computer 12c will pull both lines 18 and 20 low. In actual practice, the receiving computer 12c may attempt to pull the lines 18 and 20 low before the sending computer 12e has released the write line 18. However, since the lines 18 and 20 are pulled high and only weakly held (latched) low, any attempt to pull a line 18 or 20 low will not actually succeed until that line 18 or 20 is released by the computer 12 that is holding it high.

When both lines 18 and 20 in a data bus 16 are pulled low, this is an "acknowledge" condition. Each of the computers 12e and 12c will, upon the acknowledge condition, set its own internal acknowledge line 72 high. As can be seen in the view of Fig. 5, the acknowledge line 72 provides the second OR gate input 64. Since an input to either of the OR gate 60 inputs 62 or 64 will cause the output of the OR gate 60 to go high, this will initiate operation of the slot sequencer 42 in the manner previously described herein, such that the instruction 52 in the next slot 54 of the instruction word 48 will be executed. The acknowledge line 72 stays high until the next instruction 52 is decoded, in order to prevent spurious addresses from reaching the address bus.

In any case when the instruction 52 being executed is in the slot three position of the instruction word 48, the computer 12 will fetch the next awaiting eighteen-bit instruction word 48 unless, of course, bit i4 66 is a '0' or, also, unless the instruction in slot three is a "next" instruction, which will be discussed in more detail hereinafter.

In actual practice, the present inventive mechanism includes a method and apparatus for "prefetching" instructions such that the fetch can begin before the end of the execution of all instructions 52 in the instruction word 48. However, this also is not a necessary aspect of the presently described embodiment.

The above example wherein computer 12e is writing to computer 12c has been described in detail. As can be appreciated in light of the above discussion, the operations are essentially the same whether computer 12e attempts to write to computer 12c first, or whether computer 12c first attempts to read from computer 12e. The operation cannot be completed until both computers 12e and 12c are ready, and whichever computer 12e or 12c is ready first simply "goes to sleep" until the other computer 12e or 12c completes the transfer. Another way of looking at the above described process is that, actually, both the writing computer 12e and the receiving computer 12c go to sleep when they execute the write and read instructions, respectively, but the last one to enter into the transaction reawakens nearly instantaneously when both the read line 18 and the write line 20 are high, whereas the first computer 12 to initiate the transaction can stay asleep nearly indefinitely until the second computer 12 is ready to complete the process.

The inventor believes that a key feature for enabling efficient asynchronous communications between devices is some sort of acknowledge signal or condition. In the prior art, most communication between devices has been clocked and there is no direct way for a sending device to know that the receiving device has properly received the data. Methods such as checksum operations may have been used to attempt to insure that data is correctly received, but the sending device has no direct indication that the operation is completed. The present inventive method, as described herein, provides the necessary acknowledge condition that allows, or at least makes practical, asynchronous communications between the devices. Furthermore, the acknowledge condition also makes it possible for one or more of the devices to "go to sleep" until the acknowledge condition occurs. Of course, an acknowledge condition could be communicated between the computers 12 by a separate signal being sent between the computers 12 (either over the interconnecting data bus 16 or over a separate signal line), and such an acknowledge signal would be within the scope of this aspect of the present invention. However, according to the embodiment of the invention described herein, it can be appreciated that there is even more economy involved here, in that the method for acknowledgement does not require any additional signal, clock cycle, timing pulse, or any such resource beyond that described, to actually effect the communication.

Since four instructions 52 can be included in an instruction word 48 and since, according to the present embodiment, an entire instruction word 48 can be communicated at one time between computers 12, this presents an ideal opportunity for transmitting a very small program in one operation. For example most of a small "For/Next" loop can be implemented in a single instruction word 48. Fig. 6 is a diagrammatic representation of a micro-loop 100. The micro-loop 100, not unlike other prior art loops, has a FOR instruction 102 and a NEXT instruction 104. Since an instruction word 48 (Fig. 4) contains as many as four instructions 52, an instruction word 48 can include three operation instructions 106 within a single instruction word 48. The operation instructions 106 can be essentially any of the available instructions that a programmer might want to include in the micro-loop 100. A typical example of a micro-loop 100 that might be transmitted from one computer 12 to another might be a set of instructions for reading from, or writing to the RAM 24 of the second computer 12, such that the first computer 12 could "borrow" available RAM 24 capacity.

The FOR instruction 102 pushes a value onto the return stack 28 representing the number of iterations desired. That is, the value on the T register 44 at the top of the data stack 34 is PUSHed into the R register 29 of the return stack 28. The FOR instruction 102, while often located in slot three 54d of an instruction word 48 can, in fact, be located in any slot 54. Where the FOR instruction 102 is not located in slot three 54d, then the remaining instructions 52 in that instruction word 48 will be executed before going on to the micro-loop 100, which will generally be the next loaded instruction word 48.

According to the presently described embodiment of the invention, the NEXT instruction 104 depicted in the view of Fig. 6 is a particular type of NEXT instruction 104. This is because it is located in slot three 54d (Fig. 4). According to this embodiment of the invention, it is assumed that all of the data in a particular instruction word 40 that follows an "ordinary" NEXT instruction (not shown) is an address (the address where the for/next loop begins). The opcode for the NEXT instruction 104 is the same, no matter which of the four slots 54 it is in (with the obvious exception that the first two digits are assumed if it is slot three 54d, rather than being explicitly written, as discussed previously herein). However, since there can be no address data following the NEXT instruction 104 when it is in slot three 54d, it can be also assumed that the NEXT instruction 104 in slot three 54d is a MICRO-NEXT instruction 104a. The UNEXT opcode is different from the NEXT opcode. It can be in any slot. The MICRO-NEXT instruction 104a uses the address of the first instruction 52, located in slot zero 54a of the same instruction word 48 in which it is located, as the address to which to return. The MICRO-NEXT INSTRUCTION 104a also takes the value from the R register 29 (which was originally PUSHed there by the FOR instruction 102), decrements it by 1, and then returns it to the R register 29. When the value on the R register 29 reaches a predetermined value (such as zero), then the MICRO-NEXT instruction will load the next instruction word 48 and continue on as described previously herein. However, when the MICRO-NEXT instruction 104a reads a value from the R register 29 that is greater than the predetermined value, it will resume operation at slot zero 54a of its own instruction word 48 and execute the three instructions 52 located in slots zero through three, inclusive, thereof. That is, a MICRO-NEXT instruction 104a will always, in this embodiment of the invention, execute three operation instructions 106. Because, in some instances, it may not be desired to use all three potentially available instructions 52, a "no-op" instruction is available to fill one or two of the slots 54, as required.

It should be noted that micro-loops 100 can be used entirely within a single computer 12. Indeed, the entire set of available machine language instructions is available for use as the operation instructions 106, and the application and use of micro-loops is limited only by the imagination of the programmer. However, when the ability to execute an entire micro-loop 100 within a single instruction word 48 is combined with the ability to allow a computer 12 to send the instruction word 48 to a neighbor computer 12 to execute the instructions 52 therein essentially directly from the data bus 16, this provides a powerful tool for allowing a computer 12 to utilize the resources of its neighbors.

The small micro-loop 100, all contained within the single data word 48, can be communicated between computers 12, as described herein and it can be executed directly from the communications port 38 of the receiving computer 12, just like any other set of instructions contained in a instruction word 48, as described herein. While there are many uses for this sort of "micro-loop" 100, a typical use would be where one computer 12 wants to store some data onto the memory of a neighbor computer 12. It could, for example, first send an instruction to that neighbor computer telling it to store a incoming data word to a particular memory address, then increment that address, then repeat for a given number of iterations (the number of data words to be transmitted). To read the data back, the first computer would just instruct the second computer (the one used for storage here) to write the stored data back to the first computer, using a similar micro-loop.

By using the micro-loop 100 structure in conjunction with the direct execution aspect described herein, a computer 12 can use an otherwise resting neighbor computer 12 for storage of excess data when the data storage need exceeds the relatively small capacity built into each individual computer 12. While this example has been described in terms of data storage, the same technique can equally be used to allow a computer 12 to have its neighbor share its computational resources - by creating a micro-loop 100 that causes the other computer 12 to perform some operations, store the result, and repeat a given number of times. As can be appreciated, the number of ways in which this inventive micro-loop 100 structure can be used is nearly infinite.

As previously mentioned herein, in the presently described embodiment of the invention, either data or instructions can be communicated in the manner described herein and instructions can, therefore, be executed essentially directly from the data bus 16. That is, there is no need to store instructions to RAM 24 and then recall them before execution. Instead, in this embodiment, an instruction word 48 that is received on a communications port 38 is not treated essentially differently than it would be were it recalled from RAM 24 or ROM 26. While this lack of a difference is revealed in the prior discussion, herein, concerning the described operation of the computers 12, the following more specific discussion of how instruction words 48 are fetched and used will aid in the understanding of the embodiment.

One of the available machine language instructions is a FETCH instruction. The FETCH instruction uses the address on the A register 40a to determine from where to fetch an 18 bit word. Of course, the program will have to have already provided for placing the correct address on the A register 40a. As previously discussed herein, the A register 40a is an 18 bit register, such that there is a sufficient range of address data available that any of the potential sources from which a fetch can occur can be differentiated. That is, there is a range of addresses assigned to ROM, a different range of addresses assigned to RAM, and there are specific addresses for each of the ports 38 and for the external I/O port 39. A FETCH instruction always places the 18 bits that it fetches on the T register 44.

In contrast, as previously discussed herein, executable instructions (as opposed to data) are temporarily stored in the instruction register 30a. There is no specific command for "fetching" an 18 bit instruction word 48 into the instruction register 30a. Instead, when there are no more executable instructions left in the instruction register 30a, then the computer will automatically fetch the "next" instruction word 48. Where that "next" instruction word is located is determined by the "program counter" (the P register 40c). The P register 40c is often automatically incremented, as is the case where a sequence of instruction words 48 is to be fetched from RAM 24 or ROM 26. However, there are a number of exceptions to this general rule. For example, a JUMP or CALL instruction will cause the P register 40c to be loaded with the address designated by the data in the remainder of the presently loaded instruction word 48 after the JUMP or CALL instruction, rather than being incremented. When the P register 40c is then loaded with an address corresponding to one or more of the ports 38, then the next instruction word 48 will be loaded into the instruction register 30a from the ports 38. The P register 40c also does not increment when an instruction word 48 has just been retrieved from a port 38 into the instruction register 30a. Rather, it will continue to retain that same port address until a specific JUMP or CALL instruction is executed to change the P register 40c. That is, once the computer 12 is told to look for its next instruction from a port 38, it will continue to look for instructions from that same port 38 (or ports 38) until it is told to look elsewhere, such as back to the memory (RAM 24 or ROM 26) for its next instruction word 48. Jumps do not load the P register. They put their address on the address bus, which will be incremented and stored into P at the completion of the instruction.

As noted above, the computer 12 knows that the next eighteen bits fetched is to be placed in the instruction register 30a when there are no more executable instructions left in the present instruction word 48. By default, there are no more executable instructions left in the present instruction word 48 after a JUMP or CALL instruction (or also after certain other instructions that will not be specifically discussed here) because, by definition, the remainder of the 18 bit instruction word following a JUMP or CALL instruction is dedicated to the address referred to by the JUMP or CALL instruction. Another way of stating this is that the above described processes are unique in many ways, including but not limited to the fact that a JUMP or CALL instruction can, optionally, be to a port 38, rather than to just a memory address, or the like.

It should be remembered that, as discussed previously herein, the computer 12 can look for its next instruction from one port 38 or from any of a group of the ports 38. Therefore, addresses are provided to correspond to various combinations of the ports 38. When, for example, a computer is told to fetch an instruction from a group of ports 38, then it will accept the first available instruction word 48 from any of the selected ports 38. If no neighbor computer 12 has already attempted to write to any of those ports 38, then the computer 12 in question will "go to sleep", as described in detail above, until a neighbor does write to the selected port 38.

In such a computer it is desirable to load data into individual computers 12 on chip 10. This is not done easily by addressing data to individual computers as there is no requirement of an individual address in such an array. Similarly, it is desirable to load and execute instructions to the individual computers 12. One method has been devised to accomplish these ends and will be referred to herein as a crawler. Examination of this method will lead a person of average skill in the art to a number of similar methods. The crawler shown is an example only of how to accomplish the method and is not intended to mean that the invention is limited to its particular characteristics. For example, they are described in a context of a machine Forth object code but are not limited to that language. Machine Forth is used in the description not only because the inventors have developed this implementation but also because it is much clearer than standard object code and teaches the operation clearly. This invention could be operated with conventional object code. In addition the example is shown executing an instruction on a particular computer it must be understood that the method can be used to load any data or instruction to any computer including multiple computers.

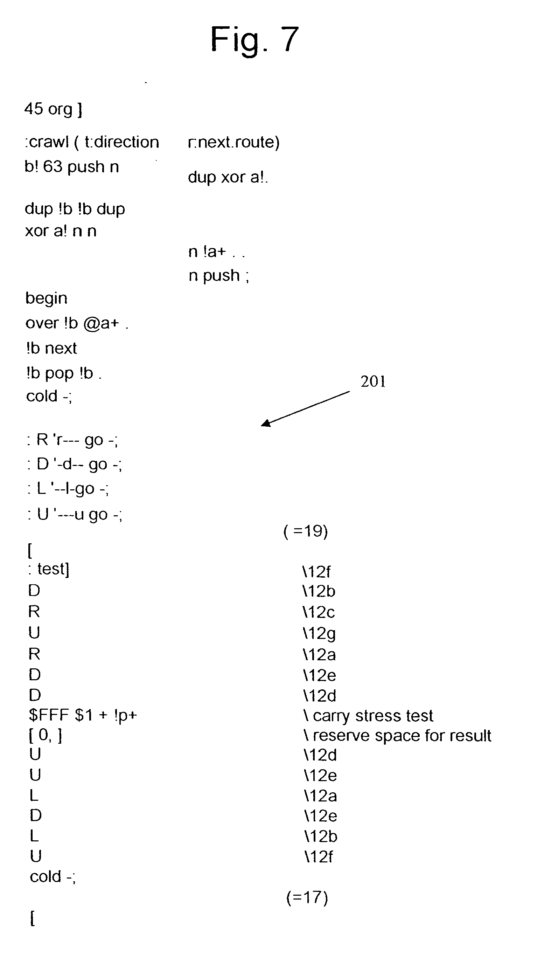

Fig. 7 describes in machine Forth a method for loading data or instructions into a desired computer in this case 12. This method is referred to as a crawler 201. Crawler 201 moves from node to node (computers 12). Crawler 201 is loaded into memory at each node and does not diminish in size as it traverses the computers 12. An alternative crawler could directly traverse computers 12 without loading and could be of variable length. The programmer creating a crawler can select which computer to execute or load onto by specifying the directions. Crawler 201 executes a stress test on computer 12d.

In crawler 201 as illustrated in Fig. 7 the first word causes numbers to be interpreted in decimal and to begin at address 45. The second word declares the name of the operation as crawl and specifies data stack 34 (t) as the direction and return stack (r) 28 as the next route. The third word b! points to port 39 (Fig 1) designated by 63 where the crawler enters, 63 is placed into RAM 24 (Fig 3) and @p+ is placed into this slot to fetch 63 as a literal. The PUSH instruction pushes one less than the size of RAM 24 as context for the subsequent NEXT instruction. The fourth word copies the word that the program counter is pointing to onto data stack 34. In this case the program counter is pointing to dup xor a! which is treated as a literal. This action will clear a register in the target node. The fifth word makes two copies of the instruction word and sends it to the neighbor port twice. The first instruction word wakes up the neighbor port and will be discarded as the neighbor port is in a four port read mode and cannot determine the origin of the word. When the word is sent the second time the neighbor port is able to determine the origin and jumps into the port to begin executing whichever instructions were sent. The dup xor instruction replaces the top item on the stack with a 0. Note the crawler is allowed to use all of the resources of both the source and destination nodes so that any prior stack content is unimportant. The sixth word places the @p+ instructions into the A register. The @p+ instructions will stack the next two words in preparation for feeding those words to the neighbor as part of the instruction stream that this node will control. The neighbor is able to modify all of RAM 24 as this instruction is executed by the port. The first @p+ with !a+... fetches the literal out of the port stores it on RAM 24 advancing the RAM pointer and the second push : forces the neighbor to begin execution at the address which it receives. The begin/next instruction will now loop 64 times from the instruction 63 in the second word. The loop copies each and every item in RAM 24 into the corresponding position in the neighbor's RAM 24. The first instruction after the loop commands the neighboring node to use the next input as a literal and the nodes return address is sent to the neighbor and placed on the neighbors return stack 28. At this point both nodes contain identical RAM 24 contents. When the neighbor continues from the address on return stack 28 it will resume at the point where the original node stopped. The Cold instruction returns the node to a four port read status and the -; instruction turns a call into a jump with the result that the program counter address is not left on the return stack and and does not take up a slot. The program illustrated defines the R, L, U, D instructions as right, left, up and down: alternative methods can use north south east and west for example. Alternately the system could be addressed to specific nodes by absolute addresses rather than relative addresses. Crawler 201 as illustrated takes up the last 19 words in RAM 24.

Returning to Fig. 1 the path 202 of crawler 201 can be seen. Crawler 201 begins at computer 12f and traverses down to computer 12b, then right to computer 12c, up to computer 12g , right to computer 12a , down to computer 12e, then down to computer 12d where the stress test is carried out. This will test to see if computer 12d can add $FFF to $1, without a carry error. The results are placed on stack 34 of computer 12d. Computer 12d directly stores a zero into word ten in memory 24. The crawler then traverses back through computers by going up to computer 12e, up again to computer 12a, left to computer 12g, then down to computer 12c, left again to computer 12b then up again ending at computer 12f. This particular test takes up 17 words but the test may be longer or shorter or may perform any desired function including loading data, extracting and transmitting data or executing instructions.

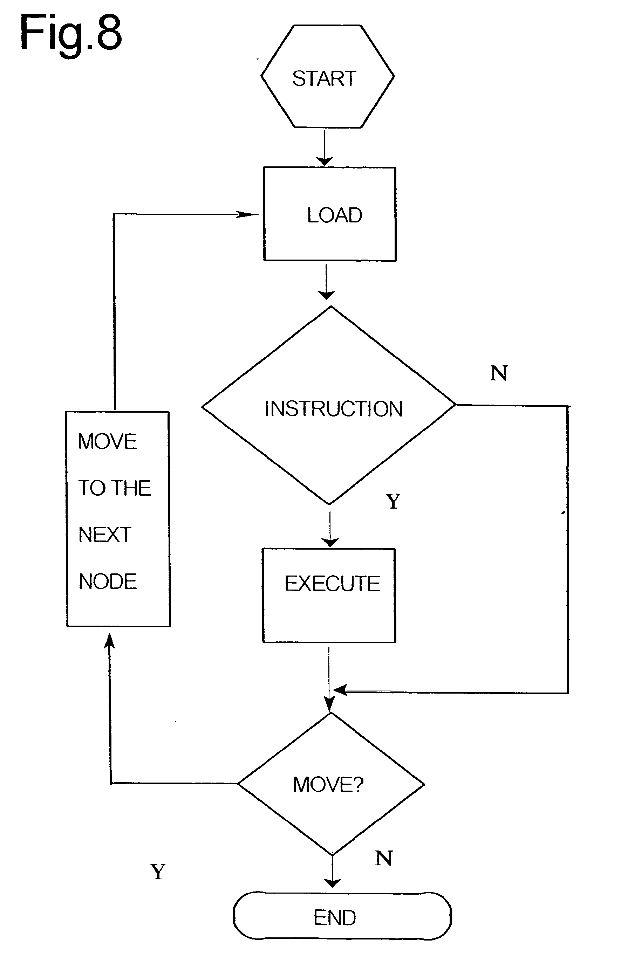

Fig. 8 is a flow chart of the method of crawler 201. Crawler 201 begins by being loaded into memory at the first of computers 12 at the port desired. If there is an instruction to be executed the instruction is executed. If there is no instruction to be executed a determination is made if there is an instruction to move the crawler. If there is such an instruction the crawler is loaded into the next node programmed into the crawler. The process repeats until there are no move instructions. If there is no such instruction the crawler ends.

Various modifications may be made to the invention without altering its value or scope. For example, while an embodiment of this invention has been described herein using the example of the particular computers 12, many or all of the inventive aspects are readily adaptable to other computer designs, other sorts of computer arrays, and the like.

Similarly, while an embodiment of the present invention has been described primarily herein in relation to communications between computers 12 in an array 10 on a single die 14, the same principles and methods can be used, or modified for use, to accomplish other inter-device communications, such as communications between a computer 12 and its dedicated memory or between a computer 12 in an array 10 and an external device.

While specific examples of the inventive computer arrays 10, computers 12, crawler 201, paths 202 and associated apparatus, and crawler method of Figures 7 and 8 have been discussed herein, it is expected that there will be a great many applications for these which have not yet been envisioned. Indeed, it is one of the advantages of the present invention that the inventive method and apparatus may be adapted to a great variety of uses.

All of the above are only some of the examples of available embodiments of the present invention. Those skilled in the art will readily observe that numerous other modifications and alterations may be made without departing from the spirit and scope of the invention. Accordingly, the disclosure herein is not intended as limiting and the appended claims are to be interpreted as encompassing the entire scope of the invention.

### INDUSTRIAL APPLICABILITY

The inventive computer arrays 10, computers 12, crawler 201 and crawler method of Fig. 8 are intended to be widely used in a great variety of computer applications. It is expected that it they will be particularly useful in applications where significant computing power is required, and yet power consumption and heat production are important considerations.

As discussed previously herein, the applicability of the present invention is such that the sharing of information and resources between the computers in an array is greatly enhanced, both in speed a versatility. Also, communications between a computer array and other devices is enhanced according to the described method and means.

Since the computer arrays 10, computers 12, crawler 201, paths 202 and associated apparatus, and crawler method illustrated in Fig. 8 of the present invention may be readily produced and integrated with existing tasks, input/output devices, and the like, and since the advantages as described herein are provided, it is expected that they will be readily accepted in the industry. For these and other reasons, it is expected that the utility and industrial applicability of the invention will be both significant in scope and long-lasting in duration.

## Claims

1. A computer system comprising:
a group of computer processors having ports, and
a crawler for transmitting information selected from the group of data, locations and instructions through a port to a first processor;
wherein said first processor is programmed to enter information intended for said first processor and transport the crawler to a second processor.

2. The system of claim 1, wherein:
said second processor is programmed to enter information intended for such second processor and transport said crawler means to a third processor.

3. The system of claim 1, wherein:
said second processor is programmed to execute instructions from the input port without interaction with said first processor.

4. The system of claim 2, wherein:
said crawler includes a location selected from the group of up, down, left and right to transport said transport means to said second processor.

5. The system of claim 2, wherein:
said information is a transfer of instructions from said port to said second processor.

6. The system of claim 2, wherein:
said information is a transfer of data from said port to said second processor.

7. The system of claim 2, wherein:
said information is in the form of data and/or instructions being sent from said port to said second processor.

8. The system of claim 1, wherein:
said input port is an external port for communicating with an external device.

9. The system of claim 1, wherein at least on of said processors comprises:
an instruction register for temporarily storing a group of instructions to be executed; and
a program counter for storing an address from which a group of instructions is retrieved into said instruction register; and
wherein the address in said program counter can be either a memory address or the address of a register.

10. The system of claim 9, wherein:
said group of instructions is retrieved into said instruction register generally simultaneously; and
said plurality of instructions is repeated a quantity of iterations as indicated by a number on a stack.

11. The system of claim 1, wherein at least one of said processors comprises:
a plurality of instructions that are read generally simultaneously; and
wherein said plurality of instructions is repeated a quantity of iterations as indicated by a number on a stack.

12. A method for transmitting data to computers in a multicomputer array with an input port having at least one computer not directly connected to said input port, comprising:
(a) introducing an input into said port causing a first computer connected to said input port to transmit at least a portion of said input to a second computer not connected to said input port;
(b) causing a second computer to enter at least part of said portion of said input.

13. The method of claim 12, wherein:
said second computer reacts to said part of said input from said first computer by executing a task.

14. The method of claim 12, wherein:
in response to input from the port said second computer runs a routine.

15. The method of claim 14 wherein:
said routine includes interfacing with a third computer.

16. The method of claim 15, wherein:
said routine includes writing to said third computer.

17. The method of claim 15, wherein:
said routine includes sending data to said third computer.

18. The method of claim 15, wherein:
said routine includes sending instructions to said third computer.

19. The method of claim 18, wherein:
said instructions are executed by said third computer sequentially as they are received.

20. A computer program which when run on an array of computers causes the array to perform the method of one of claims 12 to 19.

21. A computer readable medium having code embodied therein for causing an electronic device to perform the steps of Claims 12, 13, 14, 15, 16, 17, 18 or 19.

22. A carrier carrying a program according to claim 20.

23. A system for computing comprising:
a group of processors including at least one input port attached to one of said processors; and
crawler means for transmitting information selected from the group of data, instructions and locations from said one input port to one of said processors and to another of said processors,
wherein said crawler means further comprises a path determined by direction instructions and a means for instructing said another processor to load a payload.

24. A system for computing as in claim 23, wherein said crawler means indicates the location of said one processor relative to said input port.

25. A system for computing as in claim 24, wherein said crawler means indicates the location of said one processor relative to said input port by including a direction selected from the group consisting of up, down, right and left.

26. A system for computing as in claim 24, wherein said crawler means indicates the location of said one processor relative to said input port by including a direction selected from the group consisting of north south east and west.

27. A system for computing as in claim 23, wherein said crawler means indicates the location of said one processor absolutely by including the address of said one processor.

28. A system for computing as in claim 23, wherein said payload is data.

29. A system for computing as in claim 23, wherein said payload is instructions and said another processor is operable to execute said instructions.
